(19) Europäisches Patentamt
European Patent Office
Office européen des brevets

(11) **EP 2 169 808 B1**

(12) **EUROPÄISCHE PATENTSCHRIFT**

(45) Veröffentlichungstag und Bekanntmachung des Hinweises auf die Patenterteilung:
**17.08.2011 Patentblatt 2011/33**

(51) Int Cl.:
*H02K 3/40* *(2006.01)*    *H02K 3/14* *(2006.01)*

(21) Anmeldenummer: **09170892.5**

(22) Anmeldetag: **22.09.2009**

(54) **Roebelstab für rotierende elektrische Maschinen**

Roebel bar for rotating electrical machines

Barre Roebel pour machines électriques rotatives

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.09.2008 CH 15392008**

(43) Veröffentlichungstag der Anmeldung:
**31.03.2010 Patentblatt 2010/13**

(73) Patentinhaber: **Alstom Technology Ltd
5400 Baden (CH)**

(72) Erfinder: **Baumann, Thomas
5430, Wettingen (CH)**

(56) Entgegenhaltungen:
**JP-A- 57 095 144    JP-A- 58 157 350
US-A- 3 975 653**

**Beschreibung**

TECHNISCHES GEBIET

Die vorliegende Erfindung bezieht sich auf das Gebiet der elektrischen Maschinen. Sie betrifft einen Roebelstab gemäss dem Oberbegriff des Anspruchs 1.

STAND DER TECHNIK

Als elektrische Leiter der Statorwicklung von rotierenden elektrischen Maschinen, insbesondere Turbogeneratoren, werden so genannte Roebelstäbe eingesetzt, wie sie beispielsweise aus der Druckschrift EP-A1-0 778 648 bekannt sind. Bei einem solchen Roebelstab unterscheidet man den geraden Nutteil, der in direktem Kontakt mit dem Statoreisenblech ist, und den gebogenen Bügelteil, der aus dem Stator herausragt und über den jeder Stab mit anderen Stäben zu einer Wicklung verbunden ist (siehe die Fig. 1 der o.g. Druckschrift). Roebelstäbe sind mit einer Isolierung versehen, um einen Kurzschluss mit dem Stator-Eisenblech (Nutteil) bzw. mit anderen Roebelstäben (Bügelteil) zu vermeiden.

Als Glimmschutz ist die Oberfläche dieser Isolierung üblicherweise im (geraden) Nutteil mit einer leitfähigen Schicht versehen (Flächenleitfähigkeit etwa 1000 Ohm.cm/cm) und im (gebogenen) Bügelteil mit einer halbleitfähigen Schicht, welche bevorzugt eine feldabhängige Leitfähigkeit aufweist (Flächenleitfähigkeit $10^7$ -$10^{12}$ Ohm.cm/cm). Entsprechend werden die beiden Glimmschutzbeläge als Nutglimmschutz (NGS) und Bügelglimmschutz (BGS) bezeichnet.

Der wohl kritischste Punkt des Glimmschutzsystems NGS/BGS ist der Übergang zwischen NGS und BGS. Infolge des niedrigen Widerstandes des NGS ist dieser bis zu seinem Ende auf Erdpotential. Beim hochohmigen BGS dagegen gewinnt die kapazitive Kopplung über die Isolierung an Bedeutung. Diese bewirkt, dass das Oberflächenpotential des Roebelstabes in zunehmender Entfernung vom NGS-Ende das Potential des elektrischen Leiters ($U_L$) annimmt. Daher fliessen auf der Oberfläche Ausgleichsströme, welche im Bereich des Übergangs NGS/BGS besonders hoch sind.

Dies ist einfach zu erklären für den Fall R(BGS)= ∞. In diesem Fall ist das Oberflächenpotential U(x) an der Stelle x auf dem Bügel gegeben durch das Verhältnis von Oberflächenkapazität ($C_o$) zu Kapazität der Isolierung ($C_{iso}$). Es ist:

$$U(x) = U_L * f(C_o, C_{iso}) = U_L * C_o / (C_o + C_{iso})$$

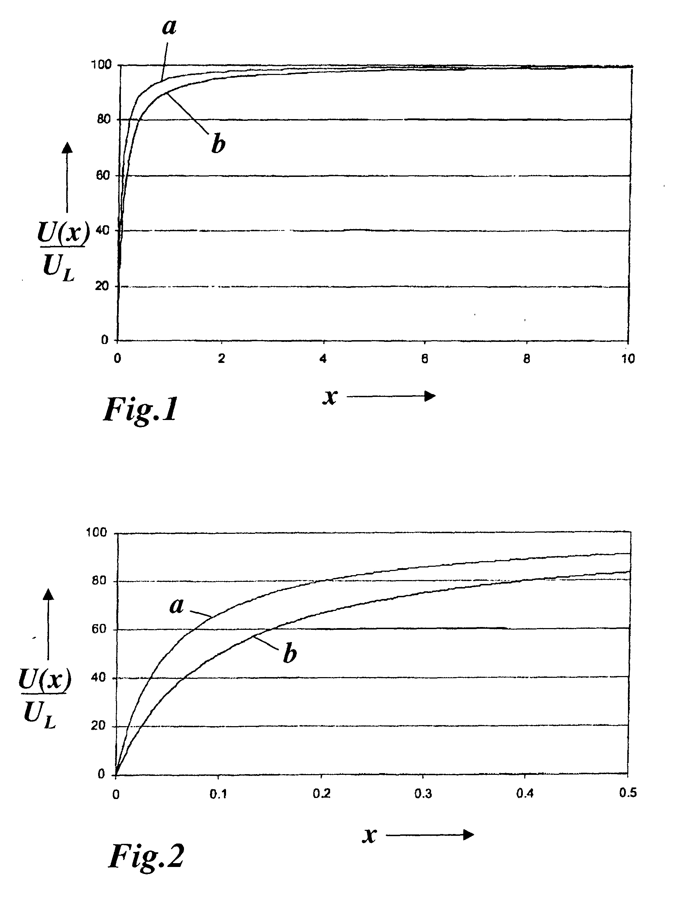

x bezeichnet hierbei die Entfernung vom Ende des NGS, welches bei x=0 ist. $C_o$ ist proportional zu 1/x, während $C_{iso}$ wie beim üblichen Plattenkondensator proportional zu ε/d (d= Isolationsdicke) ist. Die Fig. 1 und 2 zeigen den Verlauf von U(x)/$U_L$ in willkürlichen Einheiten von x, wobei das Verhältnis von $C_o$(x=1)/$C_{iso}$=0,1 ("Normale Kopplung", Kurve b) bzw. 0,2 ("starke Kopplung", Kurve a) gewählt ist. Die beiden Figuren unterscheiden sich durch eine unterschiedliche Skalierung der x-Achse.

Im Falle des feldabhängigen Widerstandes des BGS ist der Sachverhalt ähnlich, aber komplizierter zu beschreiben (siehe dazu J. Thienpont, T.H. Sie "Suppression of surface discharges in the stator windings of high voltage machines" in "conference Internationale des grands résaux électriques ä haute tension", Paris, 1964).

Das elektrische Feld E= dU/dx ist am stärksten bei x= 0. Das bedeutet aber auch, dass dort die Dichte der Verschiebeströme, j, steigt und somit auch die dielektrischen Wärmeverluste, die proportional zu E*j sind. Dies ist die Ursache der erhöhten Temperaturen am NGS-Ende. Weiterhin von Übel ist die elektrische Feldstärke selbst: Diese kann so stark ansteigen, dass es zu Oberflächen-Entladungen kommt. Dagegen hilft zwar der Glimmschutz, aber nicht bis zu jeder beliebigen Höhe von Spannung und kapazitiver Kopplung. Temperaturerhöhung und Entladungen können insbesondere unter folgenden Bedingungen auftauchen:

- Beim Test mit $U_{test}$ oberhalb $2U_n$ für $U_n$ oberhalb 20 kV.
- Beim Test mit Isolationen mit erhöhter dielektrischer Kopplung (d.h. höherem $C_{iso}$). Eine solche Isolation liegt vor, wenn beispielsweise eine Isolation mit $E_n \geq$ 3,5 kV/mm erzielt werden soll (Standard ist $E_n$ = 2,5 kV/mm - 3,0 kV/mm). Steigendes $E_n$ heisst für $U_n$ = const. eine Reduktion der Isolationsdicke um 25-40% und einen entsprechenden Anstieg von $C_{iso}$. Hinzu kommt weiter ein Anstieg von ε von ca. 50%, da der Anteil des Glimmers mit ε = 9 höher ist als in der Standardisolierung.

Aus der Druckschrift US 3,975,653 ist eine Lösung zur Verhinderung von Kriechentladungen und Teilentladungen an den Windungsenden einer rotierenden elektrischen Maschine bekannt, bei der zwei parallele Übergänge zwischen Masse-Elektrode (3) bzw. Abschirmelektrode (6) und zwei "electrical stress grading coated layers" (4, 7) vorgesehen werden, um die an solchen Übergängen auftretenden Verlustenergien auf zwei derartige Übergänge statt auf einen zu verteilen. Der dazu notwendige Schichtaufbau ist vergleichsweise kompliziert und in der Herstellung aufwändig.

Aus der Druckschrift JP 57095144 ist eine Lösung zur Verringerung der elektrische Feldstärke an den Enden einer Statorwicklung bekannt, bei der im direkten, kurzen Überlappungsbereich eines leitfähigen Lackes und eines SiC-Lackes ein Isoliermaterial vorgesehen wird. Die eigentliche Isolierung wird dadurch nicht verändert. Insbesondere beschränkt sich der Ring aus Isoliermaterial in Längsrichtung auf einen sehr kurzen Abschnitt.

Aus der Druckschrift JP 5815735 ist eine weitere Lösung für den Übergangsbereich bekannt, bei der ein 3-schichtiger Aufbau eingesetzt wird, der eine innere leitende Schicht (8), eine darüber liegende Isolierschicht (9) und darüber überlappende Schichten (6, 7) umfasst. Auch dieser Aufbau ist vergleichsweise kompliziert und in der Herstellung aufwändig.

## DARSTELLUNG DER ERFINDUNG

Es ist Aufgabe der Erfindung, einen Roebelstab zu schaffen, bei dem eine exzessive Erwärmung und das Auftreten von Entladungen im Bereich des NGS/BGS-Überganges sicher verhindert werden.

Die Aufgabe wird durch die Gesamtheit der Merkmale des Anspruchs 1 gelöst. Wesentlich für die Erfindung ist, dass zur Verhinderung von exzessiver Erwärmung und von Entladungen im Übergangsbereich zwischen Nutteil und Bügelteil in diesem Bereich Mittel zur Erniedrigung der kapazitiven Kopplung vorgesehen sind, wobei unterhalb und zu beiden Seiten des Überlappungsbereiches in den Nutteil und den Bügelteil hineinragend eine Zusatzisolierung angeordnet ist, welche die Isolierung aussen umgibt.

Gemäss einer Ausgestaltung der Erfindung unterscheidet sich die Zusatzisolierung hinsichtlich der eingesetzten Materialien von der Isolierung und weist beispielsweise eine geringere Isolationsgüte auf.

Eine andere Ausgestaltung der Erfindung ist dadurch gekennzeichnet, dass die Isolierung harzgetränkte Glas/Glimmer-Bänder enthält, und dass die Zusatzisolierung aus harzgetränkten Glasbändern und/oder Glasgeweben und/oder Glasvliesen aufgebaut ist.

Noch günstigere Ergebnisse werden erzielt, wenn die Isolierung harzgetränkte Glas/Glimmer-Bänder enthält, und die Zusatzisolierung aus harzgetränkten Bändern und/oder Geweben und/oder Vliesen aus polymeren Fasern aufgebaut ist.

Besonders vorteilhaft ist es dabei, wenn zur Imprägnierung der Bänder und/oder Gewebe und/oder Vliese ein Harz mit speziell tiefer Dielektrizitätskonstante, insbesondere ein Cyanatester, eingesetzt ist.

Es ist aber auch denkbar, dass die Zusatzisolierung aus wenig polaren Polymeren mit einer relativen Dielektrizitätskonstante von 2-4, insbesondere aus der Reihe PTFE, PP, Kapton®, Mylar® und Nylon®, besteht.

Insbesondere kann in einem solchen Fall das Material der Zusatzisolation durch Aufschrumpfen, Aufsprühen, Tauchen, Kleben, Vulkanisieren oder Giessen aufgebracht sein.

## KURZE ERLÄUTERUNG DER FIGUREN

Die Erfindung soll nachfolgend anhand von Ausführungsbeispielen im Zusammenhang mit den Zeichnungen näher erläutert werden. Es zeigen

Fig. 1    das Verhältnis von Oberflächenpotential zu Leiterpotential im Bügelteil eines Roebelstabes in Abhängigkeit von der Entfernung x zur Grenze zwischen Nutglimmschutz (NGS) und Bügelglimmschutz (BGS) für den Fall eines unendlichen Widerstandes des BGS und bei "normaler" bzw. "starker" Kopplung;

Fig. 2    den Anfangsteil der Kurven aus Fig. 1 mit gedehnter x-Achse.

Fig. 3    den Längsschnitt durch den Übergangsbereich NGS/BGS eines Roebelstabes gemäss einem Ausführungsbeispiel der Erfindung; und

Fig. 4    den Querschnitt durch den Roebelstab aus Fig. 3 an der Grenze zwischen NGS und BGS.

## WEGE ZUR AUSFÜHRUNG DER ERFINDUNG

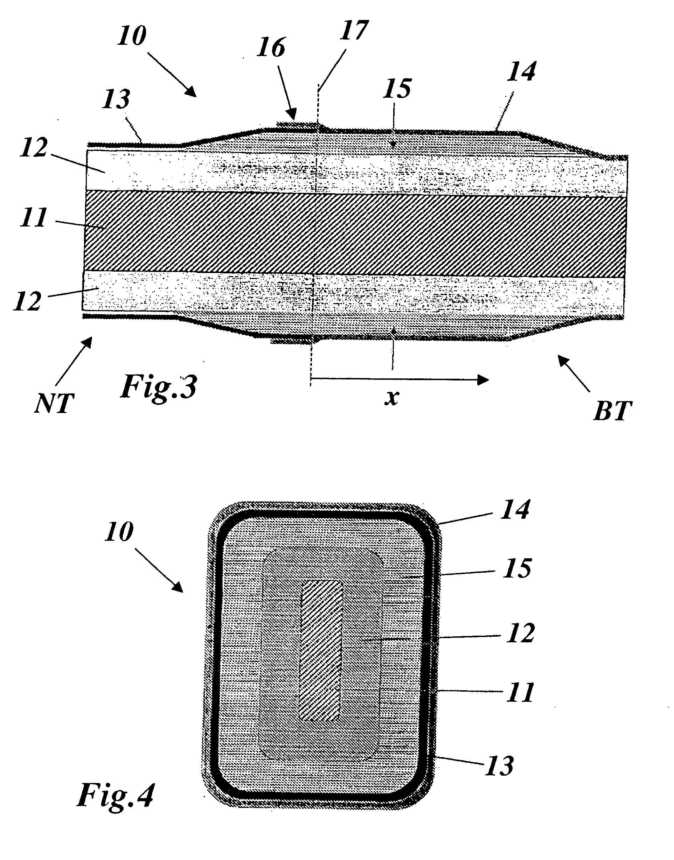

Fig. 3 und 4 zeigen den Längsschnitt und den Querschnitt durch einen Roebelstab 10 gemäss einem Ausführungsbeispiel der Erfindung im Übergangsbereich zwischen dem (geraden) Nutteil NT und dem (gebogenen) Bügelteil BT. Der Roebelstab 10 des Ausführungsbeispiels umfasst einen zentralen Cu-Leiter 11 mit näherungsweise rechteckigem Querschnitt, der von einer Isolierung 12 umgeben ist, die beispielsweise aus gewickelten, harzgetränkten Glas/Glimmer-Bändern besteht. Im Nutteil NT ist die Oberfläche der Isolierung 12 mit einer leitenden Schicht als Nutglimmschutz 13 bedeckt. Im Bügelteil BT ist die Oberfläche der Isolierung 12 mit einer halbleitenden Schicht als Bügelglimmschutz 14 bedeckt. Im Übergangsbereich überlappt der Bügelglimmschutz 14 den Nutglimmschutz 13 und bildet einen Überlappungsbereich 16 aus.

Unterhalb und zu beiden Seiten des Überlappungsbereiches 16 bzw. der Grenze 17 zwischen NGS und BGS ist in den Nutteil NT und den Bügelteil BT hineinragend eine Zusatzisolierung 15 angeordnet, welche die Isolierung 12 aussen umgibt und in der Dicke zu den Rändern hin ausläuft.

Der Einsatz der Zusatzisolation 15 ist eine bevorzugte Massnahme, um eine Erniedrigung der kapazitiven Kopplung im Bereich BGS/NGS zu erreichen.

Die Zusatzisolation 15 bildet lokal eine Verdickung der Isolation 12 im Übergangsbereich BGS/NGS. Diese Verdickung kann entweder im Herstellungsprozess des Roebelstabes implementiert werden, oder nachträglich erfolgen. Die Qualität dieser Zusatzisolation 15 braucht nicht unbedingt von der selben Güte zu sein wie die der Isolation im Nutteil NT, da diese ja bereits allein in der Lage ist, hinreichend Schutz gegen Durchschlag zu gewährleisten.

Vorzugsweise besteht daher die Zusatzisolation 15 bzw. die Verdickung nicht aus harzgetränkten Glas/Glimmer-Bändern, sondern aus harzgetränkten Glasbändern, -geweben oder -vliesen, wobei als Basismaterial nicht E-Glas, sondern Quarzglas Verwendung findet. Quarzglas hat eine Permittivität $\varepsilon = 3{,}9$, was deutlich weniger ist als die Permittivität von E-Glas ($\varepsilon = 6{,}2$) oder Glimmer ($\varepsilon = 7\text{-}10$). Dadurch wird die Gesamt-Permeabilität $\varepsilon_{tot}$ des Systems Glimmerisolierung + Glasisolierung erniedrigt.

Alternativ zu Quarzglas kann eine vorteilhafte Erniedrigung von $\varepsilon_{tot}$ erreicht werden, wenn die eingesetzten Bänder/Gewebe/Vliese aus polymeren Fasern bestehen, beispielsweise PET, PEN, Aramid, Polyamid). Diese Materialien weisen ein $\varepsilon = 3\text{-}4$ auf.

Noch tiefer in $\varepsilon_{tot}$ kommt man, wenn man zur Imprägnierung der Bänder/Gewebe/Vliese der Zusatzisolierung 15 statt der üblichen Epoxid- oder Polyesterharze ein Harz mit speziell tiefem $\varepsilon$ nimmt, beispielsweise Cyanatester mit $\varepsilon = 3$.

Eine weitere Absenkung kann erreicht werden, wenn die Zusatzisolierung 15 statt aus gewickelten und imprägnierten Bändern/Geweben/Vliesen ganz oder mehrheitlich aus wenig polaren Polymeren mit $\varepsilon = 2\text{-}4$, z.B. PTFE, PP ($\varepsilon = 2\text{-}2{,}2$), Kapton®, Mylar®, Nylon® ($\varepsilon = $ ca. 3), besteht. Die Auswahl der Kunststoffe ist nicht auf diese Beispiele beschränkt. Anstatt durch Wickeln und Imprägnieren können derartige Materialen zum Teil auch durch andere Verfahren, wie Aufschrumpfen, Aufsprühen, Tauchen, Kleben, Vulkanisieren, Giessen etc. appliziert werden, um die Zusatzisolation 15 zu erzeugen.

Ein Beispiel für die dadurch erreichbare Verbesserung sei nachfolgend angegeben:

Die Kapazität der ursprünglichen Isolierung sei gegeben durch $\varepsilon_{iso} = 6$, $d_{iso} = 4$ mm; die Kapazität der Zusatzschicht habe die entsprechenden Werte $\varepsilon_{zu} = 3$, $d_{zu} = 4$ mm.

Dann gilt:

$C_{iso} \sim 6/4 = 3/2$ $C_{zu} \sim 3/4$ $1/C_{tot} \sim 2/3 + 4/3 = 2$ => Ctot - ½.

Das bedeutet eine Reduktion der kapazitiven Kopplung um den Faktor 3.

BEZUGSZEICHENLISTE

| | |
|---|---|
| 10 | Roebelstab |
| 11 | Cu-Leiter |
| 12 | Isolierung |
| 13 | Nutglimmschutz |
| 14 | Bügelglimmschutz |
| 15 | Zusatzisolierung |
| 16 | Überlappungsbereich |
| 17 | Grenze NT/BT |
| $U(x)$ | Oberflächenpotential |
| $U_L$ | Leiterpotential |
| $C_o$ | Oberflächenkapazität |
| $C_{iso}$ | Isolierungskapazität |
| NT | Nutteil |
| BT | Bügelteil |

**Patentansprüche**

1. Roebelstab (10) für rotierende elektrische Maschinen, insbesondere für Turbogeneratoren, welcher Roebelstab (10) einen geraden Nutteil (NT) umfasst, welcher in eine Nut im Statoreisenblech der Maschine eingelegt wird, und einen daran anschliessenden gebogenen Bügelteil (BT), der aus dem Stator herausragt und über den jeder Stab mit anderen Stäben zu einer Wicklung verbunden ist, wobei der Roebelstab (10) einen von einer Isolierung (12) umgebenen Cu-Leiter (11) aufweist, und die Oberfläche der Isolierung (12) im Nutteil (NT) mit einem Nutglimmschutz (13) in Form einer elektrisch leitfähigen Schicht und im Bügelteil (BT) mit einem Bügelglimmschutz (14) in Form einer halbleitenden Schicht versehen ist, wobei zur Verhinderung von exzessiver Erwärmung und von Entladungen im Übergangsbereich zwischen Nutteil (NT) und Bügelteil (BT), in welchem der Bügelglimmschutz (14) den Nutglimmschutz (13) überlappt und einen Überlappungsbereich (16) ausbildet, Mittel (15) zur Erniedrigung der kapazitiven Kopplung vorgesehen sind, **dadurch gekennzeichnet, dass** unterhalb und zu beiden Seiten des Überlappungsbereiches (16) in den Nutteil (NT) und den Bügelteil (BT) hineinragend eine Zusatzisolierung (15) angeordnet ist, welche die Isolierung (12) aussen direkt und unmittelbar umgibt.

2. Roebelstab nach Anspruch 1, **dadurch gekennzeichnet, dass** die Zusatzisolierung (15) sich hinsichtlich der eingesetzten Materialien von der Isolierung (12) unterscheidet, beispielsweise eine andere Isolationsgüte aufweist.

3. Roebelstab nach Anspruch 2, **dadurch gekennzeichnet, dass** die Isolierung (12) harzgetränkte Glas-Glimmerbänder enthält, und dass die Zusatzisolierung (15) aus harzgetränkten Bändern und/oder Geweben und/oder Vliesen aus Quarzglas aufgebaut ist.

4. Roebelstab nach Anspruch 2, **dadurch gekennzeichnet, dass** die Isolierung (12) harzgetränkte Glas-Glimmerbänder enthält, und dass die Zusatzisolierung (15) aus harzgetränkten Bändern und/oder Geweben und/oder Vliesen aus polymeren Fasern aufgebaut ist.

5. Roebelstab nach Anspruch 3 oder 4, **dadurch gekennzeichnet, dass** zur Imprägnierung der Bänder und/oder Gewebe und/oder Vliese ein Harz mit speziell tiefer Dielektrizitätskonstante, insbesondere ein Cyanatester, eingesetzt ist.

6. Roebelstab nach Anspruch 3, **dadurch gekennzeichnet, dass** die Zusatzisolierung (15) aus wenig polaren Polymeren mit einer relativen Dielektrizitätskonstante von 2-4, insbesondere aus der Reihe PTFE, PP, Kapton®, Mylar® und Nylon®, besteht.

7. Roebelstab nach Anspruch 6, **dadurch gekennzeichnet, dass** das Material der Zusatzisolation (15) durch Aufschrumpfen, Aufsprühen, Tauchen, Kleben, Vulkanisieren oder Giessen aufgebracht ist.

**Claims**

1. Roebel bar (10) for rotating electrical machines, in particular for turbogenerators, which Roebel bar (10) comprises a straight slot part (NT), which is placed in a slot in the iron sheet of the stator of the machine, and a bent yoke part (BT), which adjoins said slot part and protrudes from the stator and by means of which each bar is connected to other bars to form a winding, the Roebel bar (10) having a Cu conductor (11) surrounded by an insulation (12), and the surface of the insulation (12) being provided with slot corona shielding (13) in the form of an electrically conductive layer in the slot part (NT) and with yoke corona shielding (14) in the form of a semiconducting layer in the yoke part (BT), it being provided that, to prevent excessive heating and discharges in the transitional region between the slot part (NT) and the yoke part (BT), in which the yoke corona shielding (14) overlaps the slot corona shielding (13) and forms a region of overlap, means (15) for lowering the capacitive coupling are provided, **characterized in that**, beneath and to both sides of the region of overlap (16), an additional insulation (15) is arranged so as to protrude isto the slot part (NT) and the yoke part (BT) directly and closely surrounding the insulation (12) on the outside.

2. Roebel bar according to Claim 1, **characterized in that** the additional insulation (15) differs from the insulation (12) with regard to the materials used, for example is of a different insulating quality.

3. Roebel bar according to Claim 2, **characterized in that** the insulation (12) includes resin-impregnated glass/mica strips, and **in that** the additional insulation (15) is built up from resin-impregnated strips and/or wovens and/or nonwovens of quartz glass.

4. Roebel bar according to Claim 2, **characterized in that** the insulation (12) includes resin-impregnated glass-mica strips, and **in that** the additional insulation (15) is built up from resin-impregnated strips and/or wovens and/or nonwovens of polymeric fibers.

5. Roebel bar according to Claim 3 or 4, **characterized in that** a resin with an especially low dielectric constant, in particular a cyanate ester, is used for impregnating the strips and/or wovens and/or nonwovens.

6. Roebel bar according to Claim 3, **characterized in that** the additional insulation (15) consists of less polar polymers with a relative dielectric constant of 2 and 4, in particular from the series PTFE, PP, Kapton®, Mylar® and Nylon®.

7. Roebel bar according to Claim 6, **characterized in that** the material of the additional insulation (15) is applied by shrink-fitting, spraying, immersion, adhesion, vulcanizing or pouring.


**Revendications**

1. Barre Roebel (10) pour machines électriques rotatives, en particulier pour turbogénérateurs, ladite barre Roebel (10) comprenant une partie plane rainurée (NT) insérée dans une encoche de la tôle de stator de la machine, adjacente à une partie cintrée (BT) qui déborde du stator et qui est reliée par cette barre aux autres barres pour former un bobinage, la barre Roebel (10) présentant un conducteur (11) en Cu entouré d'une isolation (12), la surface de l'isolation (12) étant pourvue dans la partie rainurée (NT) d'un dispositif anti-effluve rainuré (13) en forme de couche électriquement conductrice et dans la partie cintrée (BT) d'un dispositif anti-effluve cintré (14) en forme de couche semi-conductrice, un moyen (15) visant à réduire le couplage capacitif étant prévu pour empêcher un échauffement excessif et des décharges dans la zone de transition entre la partie rainurée (NT) et la partie cintrée (BT), zone de transition dans laquelle le dispositif anti-effluve cintré (14) recouvre en partie le dispositif anti-effluve (13) rainuré et forme une zone de chevauchement (16),
**caractérisée en ce que**
une isolation supplémentaire (15) pénètre dans la partie rainurée (NT) et dans la partie cintrée (BT) en dessous de la zone de chevauchement (16) et des deux côtés de celle-ci en entourant directement l'extérieur de l'isolation (12).

2. Barre Roebel selon la revendication 1, **caractérisée en ce que** les matériaux utilisés pour l'isolation supplémentaire (15) et pour l'isolation (12) sont différents et présentent par exemple une autre qualité d'isolation.

3. Barre Roebel selon la revendication 2, **caractérisée en ce que** l'isolation (12) comprend des rubans de verre et de mica imprégnés de résine et **en ce que** l'isolation supplémentaire (15) se compose de rubans imprégnés de résine, de tissus et/ou de non-tissés en verre de quartz.

4. Barre Roebel selon la revendication 2, **caractérisée en ce que** l'isolation (12) comprend des rubans de verre et de mica imprégnés de résine et **en ce que** l'isolation supplémentaire (15) se compose de rubans imprégnés de résine, de tissus et/ou de non-tissés en fibres polymères.

5. Barre Roebel selon les revendications 3 ou 4, **caractérisée en ce que** l'on utilise pour l'imprégnation des rubans, des tissus et/ou des non-tissés une résine à constante diélectrique particulièrement basse, en particulier un ester de cyanate.

6. Barre Roebel selon la revendication 3, **caractérisée en ce que** l'isolation supplémentaire (15) se compose de polymères peu polaires dont la constante diélectrique relative est comprise entre 2 et 4, en particulier de la série des PTFE, PP, Kapton®, Mylar® et Nylon®.

7. Barre Roebel selon la revendication 6, **caractérisée en ce que** le matériau de l'isolation supplémentaire (15) est appliqué par emmanchement, pulvérisation, immersion, collage, vulcanisation ou coulée.

Fig.1

Fig.2

**Fig.3**

NT     BT     x

**Fig.4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0778648 A1
- US 3975653 A
- JP 57095144 B
- JP 5815735 B

**In der Beschreibung aufgeführte Nicht-Patentliteratur**

- **J. Thienpont, T.H.** *"Suppression of surface discharges in the stator windings of high voltage machines" in "conference Internationale des grands réseaux électriques ä haute tension",* 1964